# EUROPEAN PATENT APPLICATION

(11) **EP 4 799 932 A1**
(43) Date of publication of application: **02.09.2026**
(21) Application number: 25218818.0
(22) Date of filing: 26.11.2025
(51) Int. Cl.: B64D 11/02, G01S 17/04, G06F 3/01, B61D 35/00, G09F 19/18, B65F 1/16

(54) **SYSTEMS AND METHODS FOR CONTROLLING A WASTE FLAP LEADING INTO A WASTE CONTAINER WITHIN A LAVATORY OF AN AIRCRAFT**

(30) Priority: 27.02.2025 US 202563764066 P; 06.10.2025 US 202519350401
(71) Applicant: The Boeing Company, Arlington, VA 22202 (US)
(72) Inventor: MCINTOSH, Darren Carl, Arlington, 22202 (US)
(74) Representative: Boult Wade Tennant LLP

(57) **Abstract**

A vehicle includes an internal cabin, a lavatory within the internal cabin, and a system within the lavatory. The system includes a waste flap. A motor is operatively coupled to the waste flap. The motor is configured to move the waste flap between an open position and a closed position. A sensor is configured to detect motion within a detection zone. An image emitter is configured to project one or more images into the detection zone. A control unit is configured to operate the motor to open the waste flap when the sensor detects the motion within the detection zone.

## Description

### FIELD OF THE DISCLOSURE

Examples of the present disclosure generally relate to systems and methods for controlling a waste flap that leads into a waste container within a lavatory of vehicle, such as an aircraft.

### BACKGROUND OF THE DISCLOSURE

Commercial aircraft are used to transport passengers between various locations. A typical commercial aircraft includes one or more lavatories within an internal cabin.

A lavatory within an internal cabin includes a waste container, which can be within a cabinet. The waste container is configured to receive and retain waste (for example, used hand towels and tissues). A waste flap is coupled to the cabinet. The waste flap is configured to be opened and closed. In the open position, an individual is able to deposit waste items (such as used hand towels or tissues) into the waste container.

Certain lavatories include touchless waste flaps, which can be operated without individuals touching the waste flaps with their hands. A known waste flap is coupled to a foot pedal, which can be stepped on to open the waste flap. Such assemblies are heavy, complicated, and the linkage between the waste flap and the foot pedal occupies valuable space in the waste compartment. Further, such assemblies require maintenance, as the cable stretches over time and requires readjustment. The foot pedal can also be challenging to locate, especially in small lavatories.

As another example, certain lavatories include infrared-activated, actuatable waste flaps, which include an infrared sensor disposed on the waste flap.

### SUMMARY OF THE DISCLOSURE

A need exists for an improved system and method for controlling a waste flap leading into a waste container. Further, a need exists for an efficient, effective, and lightweight system for operating such a waste flap.

With those needs in mind, certain examples of the present disclosure provide a system including a waste flap configured to be moved between an open position and a closed position. A path to a waste container is open when the waste flap is in the open position. The path to the waste container is closed when the waste flap is in the closed position. A motor is operatively coupled to the waste flap. The motor is configured to move the waste flap between the open position and the closed position. A sensor is configured to detect motion within a detection zone. An image emitter is configured to project one or more images into the detection zone. A control unit is configured to operate the motor to move the waste flap from the closed position to the open position in response to the sensor detecting the motion within the detection zone.

In at least one example, the detection zone is underneath a portion of cabinet that retains the waste container. In at least one example, the system is disposed within a lavatory of an internal cabin of a vehicle.

The image emitter can include one or both of a lighting assembly or a projector.

In at least one example, the one or more images include a first image providing a guide as to where a foot can be moved in order to automatically open the waste flap. As a further example, the one or more images include a second image providing an instruction for an individual to leave a lavatory and return to a seat within an internal cabin of a vehicle. As a further example, the control unit is configured to operate the image emitter to change between the first image and the second image in response to one or more received signals.

In at least one example, the image emitter is configured to project the one or more images onto a floor or a wall section of a recessed area below a cabinet in which the waste container is retained.

The one or more images can include one or more static images, and/or one or more dynamic images.

The sensor can include an infrared sensor, an ultrasonic proximity sensor, or the like.

In at least one example, the control unit is further configured to receive data regarding cycle count of the waste flap, and predict one or more faults of one or more components of the system based on the cycle count.

Certain examples of the present disclosure provide a vehicle including an internal cabin, a lavatory within the internal cabin, and a system, as described herein.

Certain examples of the present disclosure provide a method including detecting, by a sensor, motion within a detection zone; emitting, by an image emitter, one or more images into the detection zone; and moving, by a motor, a waste flap between an open position and a closed position, wherein a path to a waste container is open when the waste flap is in the open position, wherein the path to the waste container is closed when the waste flap is in the closed position, and wherein said moving comprises operating, by a control unit, the motor to move the waste flap from the closed position to the open position in response to the sensor detecting the motion within the detection zone

In at least one example, the method also includes receiving, by the control unit, data regarding cycle count of the waste flap; and predicting, by the control unit, one or more faults of one or more components of the system based on the cycle count.

### BRIEF DESCRIPTION OF THE DRAWINGS

Figure 1 illustrates a perspective front view of an aircraft, according to an example of the present disclosure.
Figure 2 illustrates a perspective internal view of a lavatory, according to an example of the present disclosure.
Figure 3 illustrates a block diagram of an aircraft, according to an example of the present disclosure.
Figure 4 illustrates an isometric internal view of a lavatory, according to an example of the present disclosure.
Figure 5 illustrates an image as emitted by an image emitter, according to an example of the present disclosure.
Figure 6 illustrates a flow chart of a method, according to an example of the present disclosure.
Figure 7 illustrates a flow chart of a method, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide systems and methods that include a touchless foot gesture activated/controlled waste flap. A foot well/toe kick recessed area is disposed underneath a cabinet within a lavatory. A projector is configured to project an image onto the floor, directing users to the area where a foot can activate and open the waste flap. By simply placing a foot naturally in this vicinity, an infrared, or ultrasonic proximity sensor detects foot motion and opens the waste flap. An infrared or ultrasonic proximity sensor is used to detect motion. The projector can be configured to emit a static image, such as via a Go Before Optics (GOBO) lens, or dynamic images, which show one or more images in motion. The projector can emit images in motion via a single projector, or via additional projectors and/or lights, each with a GOBO lens.

Certain examples of the present disclosure provide a vehicle including an internal cabin, a lavatory within the internal cabin, and a system within the lavatory. The system includes a waste flap. An actuator, such as a motor, is operatively coupled to the waste flap. The motor is configured to move the waste flap between an open position and a closed position. A sensor is configured to detect motion within a detection zone. An image emitter is configured to project one or more images into the detection zone. A control unit is configured to operate the motor to open the waste flap in response to the sensor detecting the motion within the detection zone. The one or more images can be static and/or dynamic (that is, moving or appearing to move) images. The sensor can be an infrared or ultrasonic proximity sensor.

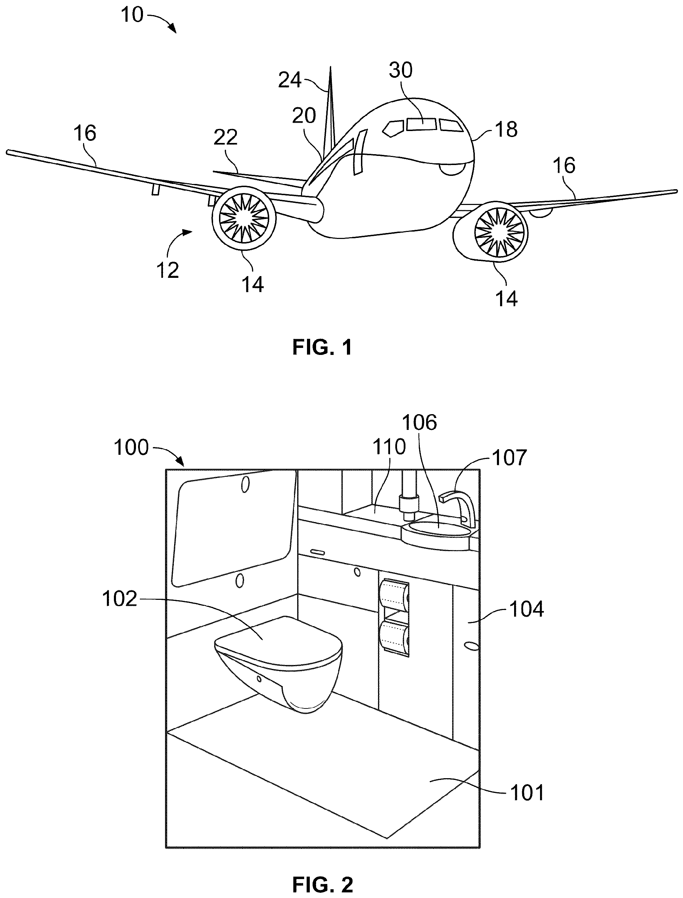

Figure 1 illustrates a perspective front view of an aircraft 10, according to an example of the present disclosure. The aircraft 10 includes a propulsion system 12 that includes engines 14, for example. Optionally, the propulsion system 12 may include more engines 14 than shown. The engines 14 are carried by wings 16 of the aircraft 10. In other examples, the engines 14 may be carried by a fuselage 18 and/or an empennage 20. The empennage 20 may also support horizontal stabilizers 22 and a vertical stabilizer 24.

The fuselage 18 of the aircraft 10 defines an internal cabin 30, which includes a flight deck or cockpit, one or more work sections (for example, galleys, personnel carry-on baggage areas, and the like), one or more passenger sections (for example, first class, business class, and coach sections), one or more lavatories, and/or the like.

Optionally, instead of an aircraft, examples of the present disclosure may be used with various other vehicles, such as automobiles, buses, locomotives and train cars, watercraft, and the like. Further, examples of the present disclosure may be used with respect to fixed structures, such as commercial and residential buildings.

Figure 2 illustrates a perspective internal view of a lavatory 100, according to an example of the present disclosure. The lavatory 100 may be onboard an aircraft, as described above. Optionally, the lavatory 100 may be onboard various other vehicles. In other examples, the lavatory 100 may be within a fixed structure, such as a commercial or residential building. The lavatory 100 includes a base floor 101 that supports a toilet 102, cabinets 104, and a sink 106 or wash basin. A faucet 107 is configured to flow water into the sink 106. The faucet 107 is in fluid communication with a water supply, such as through one or more conduits, pipes, tubes, and/or the like. The sink 106 is disposed on and/or within a countertop 110, which is disposed on or otherwise over a cabinet 104. The lavatory 100 may be arranged differently than shown. The lavatory 100 may include more or less components than shown.

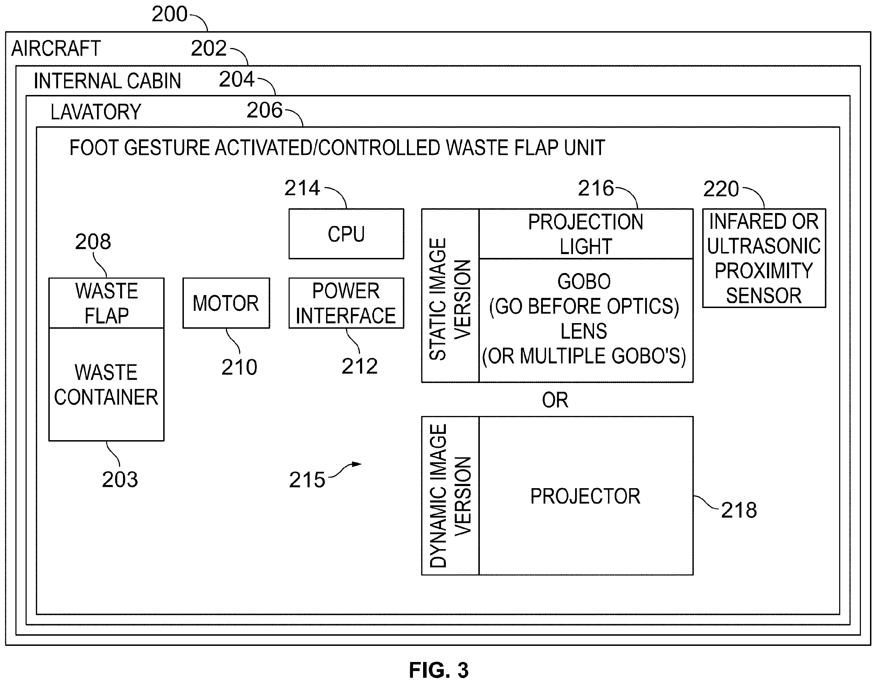

Figure 3 illustrates a block diagram of an aircraft 200, according to an example of the present disclosure. The aircraft 2 shown in Figure 1 is an example of the aircraft 200. The aircraft 200 includes an internal cabin 202. A lavatory 204 is within the internal cabin 202. The lavatory 100 shown in Figure 2 is an example of the lavatory 204.

The lavatory 100 includes a system 206 for controlling operation of a waste flap 208. The system 206 includes the waste flap 208, an actuator (such as a motor 210) operatively coupled to the waste flap 208, and a power interface 212 that supplies power to the motor 210 and other components, such as a control unit 214 (for example, a central processing unit), which is configured to control operation of the system 206. The waste flap 208 is configured to be moved between an open position, thereby providing a path into a waste container 203, and a closed position, which closes the path to the waste container 203. The waste container 203 can be disposed within a cabinet, and the waste flap 208 can be moveably coupled on and/or within a passage formed in a wall of the cabinet.

The system 206 further includes an image emitter 215, such as can include one or both of a lighting assembly 216 and/or a projector 218. The system 206 also includes a proximity sensor 220, such as an infrared or ultrasonic sensor that is configured to detect presence or motion, such as motion of a foot. The lighting assembly 216 can include one or more lights (such as light emitting diodes, one or more lasers, or the like), a lens, or a GOBO ("Go Before Optics") lens.

In operation, the image emitter 215 emits an image in an area of foot detection, such as within a foot recess area underneath a cabinet. The image emitted by the image emitter 215, whether static or moving, provides a guide as to where a foot can be moved in order to automatically open the waste flap 208 (without an individual touching the waste flap 208). When a foot is moved into the area indicated by the image, the sensor 220 detects such motion, and sends a signal to the control unit 214. In response to receiving the signal, the control unit 214 operates the motor 210 to open the waste flap 208.

As described herein, a vehicle, such as the aircraft 200, includes an internal cabin 202. A lavatory 204 is within the internal cabin 202. A system 206 is within the lavatory 204. The system 206 includes a waste flap 208. An actuator, such as a motor 210, is operatively coupled to the waste flap 208. The motor 210 is configured to move the waste flap 208 between an open position and a closed position. A sensor 220 is configured to detect motion within a detection zone. An image emitter 215 is configured to project one or more images into the detection zone. A control unit 214 is configured to operate the motor 210 to open the waste flap 208 in response to the sensor 220 detecting the motion within the detection zone. The image(s) can be static and/or dynamic images. Examples of the sensor 220 include infrared or ultrasonic proximity sensors.

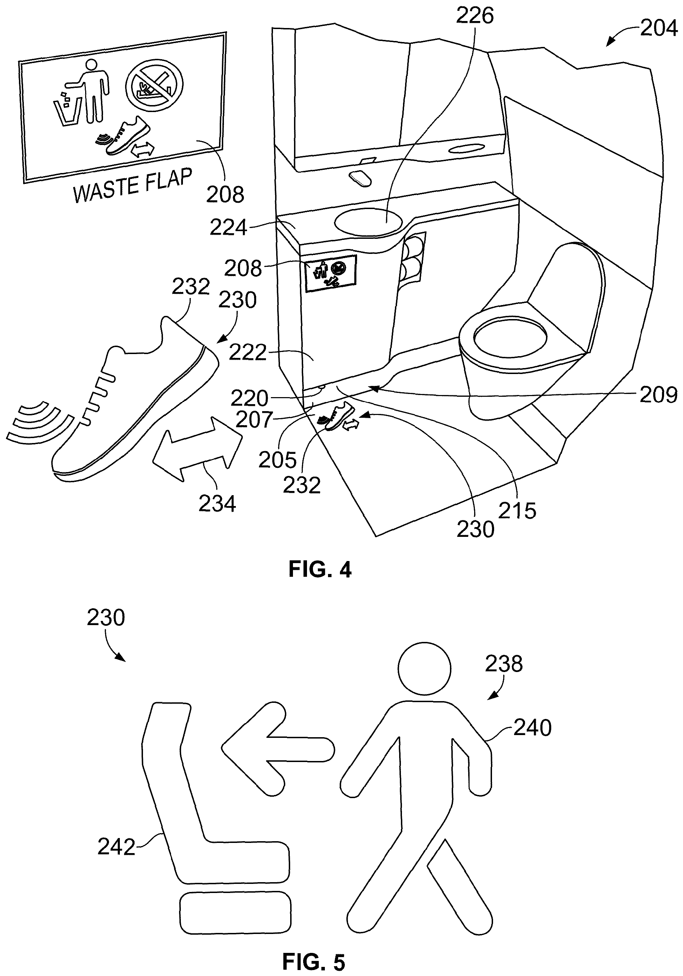

Figure 4 illustrates an isometric internal view of the lavatory 204, according to an example of the present disclosure. As shown, the image emitter 215 projects the image 230, such as onto a floor 205 and/or wall section 207 of a recessed area 209 below a cabinet 222, in which the waste container 203 (shown in Figure 3) is retained. As shown, a countertop 224 supporting a sink 226 can be coupled to, and disposed over, the cabinet 222. The image 230 can be a static image showing a shoe 232, and an instruction 234 for how to open the waste flap 208 by moving a foot in a particular direction in relation to the area where the sensor 220 is configured to detect motion. Optionally, the instruction 234 can include text.

Figure 5 illustrates an image 230 as emitted by the image emitter 215, according to an example of the present disclosure. Referring to Figures 3-5, in at least one example, the control unit 214 is configured to change the image 230 in response to one or more received signals. For example, the control unit 214 can be in communication with a system that indicates that passengers are to return to seats. In response to receiving an associated signal from the system, the control unit 214 changes the image 230, such as shown in Figure 4, to the image 230 shown in Figure 5, which includes instructions 238 informing the individual within the lavatory 204 to leave the lavatory 204 return to his/her seat within a passenger seating section within the internal cabin 202 as soon as possible. For example, the instructions 238 include a representation of an individual 240 walking back to a seat 242.

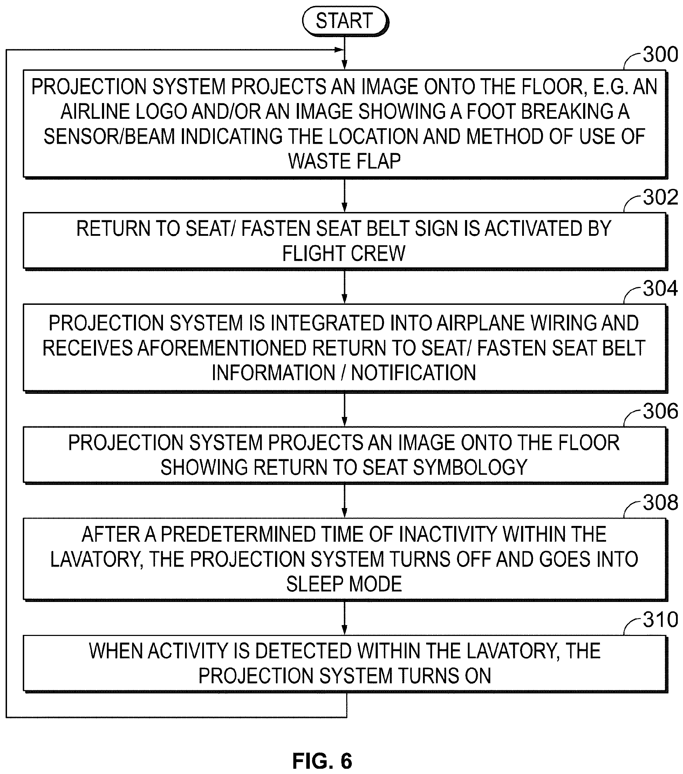

Figure 6 illustrates a flow chart of a method, according to an example of the present disclosure. Referring to Figures 3-6, at 300, the image emitter 215 projects an image 230 onto a floor. In response to a return to seat/fasten seat belt sign being activated at 302, the control unit 214 operates the image emitter 215 at 304 to change the image 230 to a return to seat image at 306. At 308, after a predetermined period of time, such as 3 minutes or less, the system 206 goes into sleep mode (such that the image emitter 215 is deactivated). At 310, when activity is detected (such as by a door of the lavatory opening, a lock being engaged, or the like), the system 206 switches into active mode, and the image emitter 215 emits the image 230, such as shown in Figures 4 or 5.

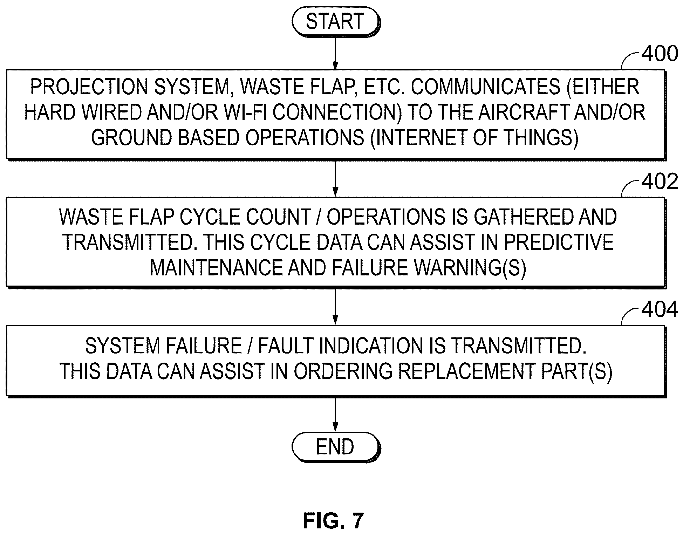

Figure 7 illustrates a flow chart of a method, according to an example of the present disclosure. As shown in Figure 7, the control unit 214 can determine/predict system faults, failures, record cycle data, etc., and output signals regarding maintenance requirements. In at least one example, the control unit 214 can further report such faults, failures, and the like to a user interface, so that an individual can readily discern such faults, failures, and the like. For example, at 400, the control unit 214 communicates with one or more systems of the aircraft 200 and/or ground based operations systems. At 402, the control unit 214 receives data from one or more systems to determine waste flap cycle count (for example, the number of times the waster flap 208 has been opened and closed), and then transmit such information as cycle data to provide information regarding predictive maintenance and failure warnings. At 404, the control unit 214 can then use such information to predict (and report) failure and/or fault detection of the system 206 (for example, anomalies, errors, failures, or other such faults of one or more components of the system 206, such as the waste flap 208, the motor 210, the projector 218, the sensor 220, and/or the like), and replacement parts can be ordered in advance of any failure or fault.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 214 may be or include one or more processors that are configured to control operation, as described herein.

The control unit 214 is configured to execute a set of instructions that are stored in one or more data storage units or elements (such as one or more memories), in order to process data. For example, the control unit 214 may include or be coupled to one or more memories. The data storage units may also store data or other information as desired or needed. The data storage units may be in the form of an information source or a physical memory element within a processing machine.

The set of instructions may include various commands that instruct the control unit 214 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 214. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 214 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include features of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Further, the disclosure comprises examples according to the following clauses:
Clause 1. A system comprising:
   a waste flap configured to be moved between an open position and a closed position, wherein a path to a waste container is open when the waste flap is in the open position, and wherein the path to the waste container is closed when the waste flap is in the closed position;
   a motor operatively coupled to the waste flap, wherein the motor is configured to move the waste flap between the open position and the closed position;
   a sensor configured to detect motion within a detection zone;
   an image emitter configured to project one or more images into the detection zone; and
   a control unit configured to operate the motor to move the waste flap from the closed position to the open position in response to the sensor detecting the motion within the detection zone.
Clause 2. The system of Clause 1, wherein the detection zone is underneath a portion of cabinet that retains the waste container.
Clause 3. The system of Clauses 1 or 2, wherein the system is disposed within a lavatory of an internal cabin of a vehicle.
Clause 4. The system of any of Clauses 1-3, wherein the image emitter comprises one or both of a lighting assembly or a projector.
Clause 5. The system of any of Clauses 1-4, wherein the one or more images comprise a first image providing a guide as to where a foot can be moved in order to automatically open the waste flap.
Clause 6. The system of Clause 5, wherein the one or more images comprise a second image providing an instruction for an individual to leave a lavatory and return to a seat within an internal cabin of a vehicle.
Clause 7. The system of Clause 6, wherein the control unit is configured to operate the image emitter to change between the first image and the second image in response to one or more received signals.
Clause 8. The system of any of Clauses 1-7, wherein the image emitter is configured to project the one or more images onto a floor or a wall section of a recessed area below a cabinet in which the waste container is retained.
Clause 9. The system of any of Clauses 1-8, wherein the one or more images comprise one or more static images.
Clause 10. The system of any of Clauses 1-9, wherein the one or more images comprise one or more dynamic images.
Clause 11. The system of any of Clauses 1-10, wherein the sensor comprises an infrared sensor or an ultrasonic proximity sensor.
Clause 12. The system of any of Clauses 1-11, wherein the control unit is further configured to:
   receive data regarding cycle count of the waste flap, and
   predict one or more faults of one or more components of the system based on the cycle count.
Clause 13. A vehicle comprising:
   an internal cabin;
   a lavatory within the internal cabin; and
   a system within the lavatory, the system comprising:
      a waste flap configured to be moved between an open position and a closed position, wherein a path to a waste container is open when the waste flap is in the open position, and wherein the path to the waste container is closed when the waste flap is in the closed position;
      a motor operatively coupled to the waste flap, wherein the motor is configured to move the waste flap between the open position and the closed position;
      a sensor configured to detect motion within a detection zone;
      an image emitter configured to project one or more images into the detection zone; and
      a control unit configured to operate the motor to move the waste flap from the closed position to the open position in response to the sensor detecting the motion within the detection zone.
Clause 14. The vehicle of Clause 13, wherein the detection zone is underneath a portion of cabinet that retains the waste container.
Clause 15. The vehicle of Clauses 13 or 14, wherein the image emitter comprises one or both of a lighting assembly or a projector.
Clause 16. The vehicle of any of Clauses 13-15, wherein the one or more images comprise:
   a first image providing a guide as to where a foot can be moved in order to automatically open the waste flap; and
   a second image providing an instruction for an individual to leave a lavatory and return to a seat within an internal cabin of a vehicle,
   wherein the control unit is configured to operate the image emitter to change between the first image and the second image in response to one or more received signals.
Clause 17. The vehicle of any of Clauses 13-16, wherein the image emitter is configured to project the one or more images onto a floor or a wall section of a recessed area below a cabinet in which the waste container is retained.
Clause 18. The vehicle of any of Clauses 13-17, wherein the control unit is further configured to:
   receive data regarding cycle count of the waste flap, and
   predict one or more faults of one or more components of the system based on the cycle count.
Clause 19. A method comprising:
   detecting, by a sensor, motion within a detection zone;
   emitting, by an image emitter, one or more images into the detection zone; and
   moving, by a motor, a waste flap between an open position and a closed position, wherein a path to a waste container is open when the waste flap is in the open position, wherein the path to the waste container is closed when the waste flap is in the closed position, and wherein said moving comprises operating, by a control unit, the motor to move the waste flap from the closed position to the open position in response to the sensor detecting the motion within the detection zone
Clause 20. The method of Clause 19, further comprising:
   receiving, by the control unit, data regarding cycle count of the waste flap; and
   predicting, by the control unit, one or more faults of one or more components of the system based on the cycle count.

Referring to Figures 1-7, examples of the present disclosure provide systems and methods including a touchless foot gesture activated/controlled waste flap. As described herein, examples of the present disclosure provide improved systems and methods for controlling a waste flap leading into a waste container. Further, examples of the present disclosure provide efficient, effective, and lightweight systems for operating such a waste flap.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the disclosure without departing from the scope of the claims. While the dimensions and types of materials described herein are intended to define the parameters of the various examples of the disclosure, the examples are by no means limiting and are exemplary. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art.

## Claims

1. A system (206) comprising:
a waste flap (208) configured to be moved between an open position and a closed position, wherein a path to a waste container (203) is open when the waste flap (208) is in the open position, and wherein the path to the waste container (203) is closed when the waste flap (208) is in the closed position;
a motor (210) operatively coupled to the waste flap (208), wherein the motor (210) is configured to move the waste flap (208) between the open position and the closed position;
a sensor (220) configured to detect motion within a detection zone;
an image emitter (215) configured to project one or more images (230) into the detection zone; and
a control unit (214) configured to operate the motor (210) to move the waste flap (208) from the closed position to the open position in response to the sensor (220) detecting the motion within the detection zone.

2. The system (206) of claim 1, wherein the detection zone is underneath a portion of cabinet (104) that retains the waste container (203).

3. The system (206) of claim 1 or 2, wherein the system (206) is disposed within a lavatory (100, 204) of an internal cabin (202) of a vehicle.

4. The system (206) of any preceding claim, wherein the image emitter (215) comprises one or both of a lighting assembly (216) or a projector (218).

5. The system (206) of any preceding claim, wherein the one or more images (230) comprise a first image (230) providing a guide as to where a foot can be moved in order to automatically open the waste flap (208).

6. The system (206) of claim 5, wherein the one or more images (230) comprise a second image (230) providing an instruction (234, 238) for an individual to leave a lavatory (100, 204) and return to a seat within an internal cabin (202) of a vehicle.

7. The system (206) of claim 6, wherein the control unit (214) is configured to operate the image emitter (215) to change between the first image (230) and the second image (230) in response to one or more received signals.

8. The system (206) of any preceding claim, wherein the image emitter (215) is configured to project the one or more images (230) onto a floor or a wall section (207) of a recessed area (209) below a cabinet (104) in which the waste container (203) is retained.

9. The system (206) of any preceding claim, wherein the one or more images (230) comprise one or more static images (230) and/or one or more dynamic images (230).

10. The system (206) of any preceding claim, wherein the sensor (220) comprises an infrared sensor (220) or an ultrasonic proximity sensor (220) (220).

11. The system (206) of any preceding claim, wherein the control unit (214) is further configured to:
receive data regarding cycle count of the waste flap (208), and
predict one or more faults of one or more components of the system (206) based on the cycle count.

12. A vehicle comprising:
an internal cabin (202);
a lavatory (100, 204) within the internal cabin (202); and
the system (206) of any preceding claim within the lavatory (100, 204).

13. The vehicle of claim 12, wherein the vehicle is an aircraft (10, 200).

14. A method comprising:
detecting, by a sensor of a system, motion within a detection zone;
emitting, by an image emitter of the system, one or more images into the detection zone; and
moving, by a motor of the system, a waste flap of the system between an open position and a closed position, wherein a path to a waste container of the system is open when the waste flap is in the open position, wherein the path to the waste container is closed when the waste flap is in the closed position, and wherein said moving comprises operating, by a control unit, the motor to move the waste flap from the closed position to the open position in response to the sensor detecting the motion within the detection zone.

15. The method of claim 14, further comprising:
receiving, by the control unit, data regarding cycle count of the waste flap; and
predicting, by the control unit, one or more faults of one or more components of the system based on the cycle count.
